# EUROPEAN PATENT SPECIFICATION

(11) **EP 1 166 537 B1**
(45) Date of publication and mention of the grant of the patent: **13.08.2008**
(21) Application number: 00912694.7
(22) Date of filing: 15.03.2000
(51) Int. Cl.: H04M 3/42

(54) **METHOD AND APPARATUS FOR DEFINING INTERFACE AND TELECOMMUNICATION SYSTEM**
VERFAHREN UND VORRICHTUNG FÜR DIE DEFINITION EINER SCHNITTSTELLE SOWIE TELEKOMMUNIKATIONSSYSTEM
PROCEDE ET APPAREIL POUR LA DEFINITION D'UN SYSTEME D'INTERFACE ET DE TELECOMMUNICATIONS

(30) Priority: 16.03.1999 FI 990588
(43) Date of publication of application: 02.01.2002
(73) Proprietor: Nokia Siemens Networks Oy, 02610 Espoo (FI)
(72) Inventor: GEUDER, Uwe, FIN-33710 Tampere (FI)
(74) Representative: Pursiainen, Timo Pekka
(86) International application number: PCT/FI2000/000207
(87) International publication number: WO 2000/056084

(56) References cited:
- EP-A2- 0 592 154
- WO-A1-99/40711
- US-A- 5 377 186

## Description

The invention relates to a method for defining an interface between a network management system and a network element in a telecommunication network, in which method data elements that can be transferred over an interface are defined.

The invention also relates to a telecommunication system comprising a network management system and at least one network element and an interface between them, the interface being arranged to be defined by means of data elements.

The invention further relates to a telecommunication network element arranged to define an interface between a network management system and a network element in the telecommunication network.

The term interface refers in this connection to a point of contact between two co-operating devices, systems or programs and an agreement on the demands of the co-operation. The term telecommunication network element refers herein to a network management system or a network element, whereby the above mentioned interface can also be formed between two network elements, if at least one of the network elements is responsible for the functions of the network management system.

The document EP0592154 shows for example a telecommunication network where network elements such as switches and databases, are provided with redundant SS7 signalling interfaces. The interfaces are customized depending on the type of network element they are serving.

In large telecommunication networks, the functioning of network management systems is an essential prerequisite for ensuring the network operation. Network management systems are especially important in wireless telecommunication networks, e.g. large mobile communication networks, which may comprise thousands of logical network elements. As mobile communication networks are becoming more common, the demands for increasing the coverage area and capacity of networks become naturally stronger, which for its part increases the amount of various network elements managed by one network operator.

This demands a lot from a network management system. A network operator has to be able to monitor and control network capacity and network elements preferably from one point. Further, information on the operation of all elements should be provided at regular intervals, the information concerning element load, what kind of data transmission takes place through an element and malfunctions of elements. Adding new network elements to a telecommunication network and network management system has to be easy, which requires that interfaces are accurately defined both between different network elements and between network elements and the network management system.

The term network interface is used for an interface between network elements and a network management system. The network interface allows us to determine which network element functions the network management system is capable of controlling and monitoring. If network element functions are developed or the network element is replaced by a new network element, the network interface must be redefined. In modern telecommunication networks network interfaces are defined already while the network is being planned before the implementation of network elements and the network management system. Typically a network interface is programmed into the network element and network management system already at the stage of production.

What creates problems in the above arrangement are the drawbacks caused by the redefinition of a network interface. If, due to the development of technology or hardware changes, the network interface has to be redefined or additional definitions have to be made, the network interface must be reprogrammed both in the network element using said interface and in the network management system. What this additional updating, potential hardware and software changes resulting therefrom and testings mean for production is that manufacturing times become longer and that products that have already been manufactured have to be updated again. In installed telecommunication networks, both the network element and the network management system have to be reprogrammed, which causes a lot of extra work. Typically the network element or network management system, or both, must be disconnected from the telecommunication network during updating, which naturally weakens the network capacity and requires a good planning of back-up systems.

The object of the invention is thus to provide a method and an apparatus implementing the method, by which the above problems can be eliminated. The objects of the invention are achieved by a method, which is characterized by
coding said data elements that can be transferred over the interface and their values by means of a self-describing mark-up language,
conveying the data elements and their values coded by means of said self-describing mark-up language over said interface and
decoding the received data elements and their values.

The telecommunication system of the invention is characterized in that
said data elements and their values are arranged to be coded by means of a self-describing mark-up language,
the data elements and their values coded by means of said self-describing mark-up language are arranged to be conveyed over said interface and
the received data elements and their values coded by means of said self-describing mark-up language are arranged to be decoded.

The telecommunication network element of the invention is characterized in that
the apparatus comprises means for coding data elements and their values by means of a self-describing mark-up language and/or
means for decoding the data elements and their values coded by means of the self-describing mark-up language and
communication means for receiving the coded data elements and their values and/or conveying them over the interface.

According to a preferred embodiment of the invention, different element definitions can be stored in the network management system and network element, and the element definition that can be transferred over the new interface can be stored either in the network management system or in the network element. Further, according to a preferred embodiment of the invention data elements and their values are coded by means of a self-describing mark-up language into a message such that the coded message comprises a start field, an information field and preferably an end field.

The invention is based on the idea that interface definitions are conveyed over the network interface such that data elements according to the interface definitions and the data element values are coded into the message to be transmitted. The receiver is capable of decoding the data elements and their values contained in the message.

The method of the invention provides the advantage that it is much more easier to define interfaces. The procedure of the invention for defining interfaces does not require the same interface definition on both sides of the network interface, so the interface definitions can be made in the network management system and the network element at different times. A network management system and network element can communicate over the network interface, even though their interface definitions were different, and, unlike in the prior art, differences in the interface definitions do not cause a wrong interpretation of the messages to be conveyed over the network interface. Thus, in installed telecommunication networks, network elements or a network management system do not have to be disconnected during updating, and the updating does not have a harmful effect on the network capacity. Further, additional updatings in the production need not be made, as the procedure of the invention does not require the same interface definition in the network management system and network element at the installing stage either.

In the following the invention will be described in greater detail in connection with preferred embodiments, with reference to the attached drawings, in which
Figure 1 shows a network management system of a telecommunication network and network elements belonging to the telecommunication network;
Figure 2 shows a prior art method for defining a network interface;
Figure 3 shows a prior art method for updating a network interface definition;
Figure 4 shows a method according to a preferred embodiment of the invention for defining and updating a network interface;
Figure 5 shows a message according to a preferred embodiment of the invention for defining a network interface;
Figure 6 shows a block diagram of a telecommunication network element according to a preferred embodiment of the invention for defining a network interface and
Figure 7 shows a telecommunication system according to a preferred embodiment of the invention.

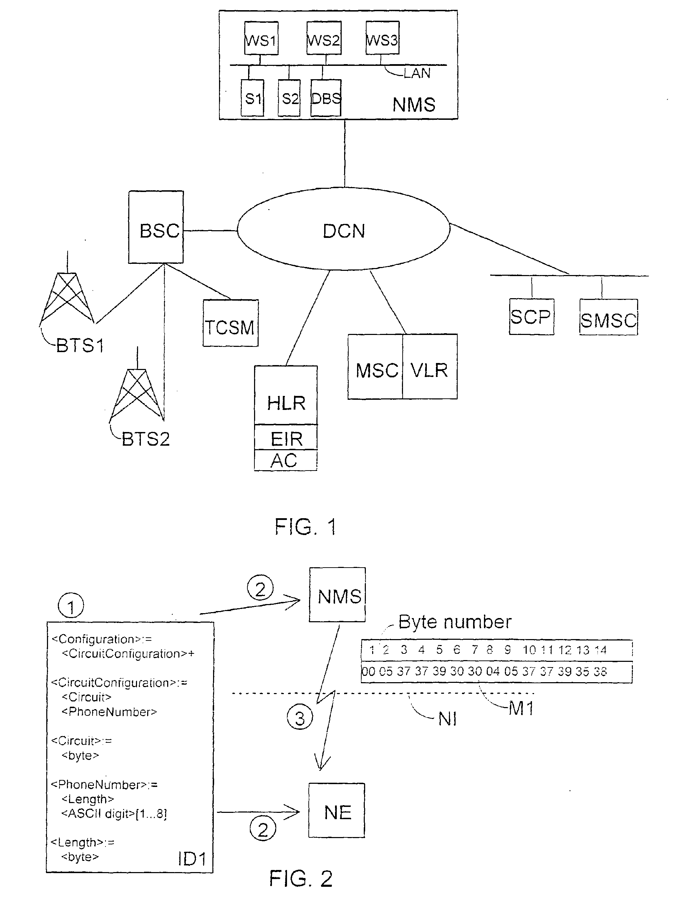

With reference to Figure 1, a typical network management system of a mobile communication network, especially GSM network, is described in greater detail in the following. However, the invention is not restricted to wireless telecommunication networks only, but the method of the invention can be used in any telecommunication network.

Figure 1 shows a typical centralized network management system (NMS), which is in connection with various network elements (NE) via a data communication network (DCN). A data communication network can be implemented in a variety of known ways, e.g. as a circuit-switched PCM connection (Pulse Code Modulation), a packet-switched network or a local area network according to the OSI model. A network management system controls and monitors mobile services switching centres (MSC), visitor location registers (VLR) in connection with them, home location registers (HLR) typically also comprising an equipment identity register (EIR) and an authentication centre (AC), base station controllers (BSC), transcoders and submultiplexers (TCSM) and base transceiver stations (BTS). In addition, subordinated to a network management system, there may be network elements that do not directly belong to the functions of the mobile communication network, such as a short message service centre (SMSC) or a service control point (SCP) of an intelligent network. There may be thousands of different network elements that are subordinated to the network management system. Typically the network management system itself comprises several servers (S1, S2) and work stations (WS1 to WS3) providing a user interface. At least one server is typically reserved as a database server (DBS), to which measuring information on the network element operation can be stored.

It is to be noted that in telecommunication networks, a network management system need not necessarily be centralized, as described above, but also a decentralized network management system can be used in telecommunication networks. The network comprises then several network management systems NMS, which are independent of each other and each of which has its own sphere of responsibilities in controlling network elements. Also a network element can perform functions of a network management system in respect of other network elements. A network management system can thus be interpreted as one telecommunication network element. The method of the invention can also be applied to a decentralized network management system.

By means of Figure 2, a prior art procedure is next described for defining a network interface. Figure 2 shows a simplified telecommunication system, in which only one network management system NMS and one network element NE are described. To make the principles clearer, the amount of parameters in the interface definition (ID) is minimised. In real telecommunication systems, there are hundreds or thousands of network elements and definition parameters. There can also be several network management systems in a telecommunication system. Through a network interface (NI), information is typically conveyed in two directions: from a network element to a network management system and vice versa. The information that is sent from the network element comprises configuration information, error messages and information on performance figures of the network element. On the basis of this information, information on network element configurations and performance figures and on error situations is updated in the network management system. The information that is sent from the network management system to the network element typically comprises configuration information by which the network management system defines network element settings. The principles that are now described for defining a network interface are applicable both from the network element to the network management system and in the opposite direction. To simplify the description, however, only methods for transmitting data from the network management system to the network element are explained.

According to the prior art, a network interface is defined before the network element and network management system are definitively installed and introduced in the telecommunication network. In the interface definition, either generally accepted standard interfaces or de facto standard interfaces can be used or the interface can be defined by the manufacturer itself. By way of example, the interface definition ID1 of Figure 2 only comprises one defined set of data elements and parameters *Configuration.* This is determined to comprise one or more data elements *CircuitConfiguration,* which according to the definition further comprises parameters *Circuit* and *PhoneNumber.* The parameter *Circuit* is given a value having the length of one byte, which value can be expressed as a hexadecimal number, for example. Further, according to the interface definition ID1 the parameter *PhoneNumber* further comprises a field *Length,* which is further determined to have the length of one byte, and a field *ASCII digit,* which may comprise one to eight ASCII-coded numerical values.

After the interface definition ID1 is performed (step 1), it is updated both in the network management system NMS and the network element NE (step 2). The updating into a part of the total definition of the network interface can be done for example manually by programming or automatically as a programming language translation. When the interface definition ID1 is updated both in the network management system NMS and the network element NE, the network management system NMS can transmit configuration information according to the interface definition ID1 to the network element NE (step 3). The configuration information to be conveyed only comprises the values according to the interface definition ID1, and no definitions describing the values are sent at this stage. As the same interface definition ID1 is updated on both sides of the network interface, the network element can interpret the received values and perform a configuration according to these values.

In Figure 2, a configuration message M1 according to the interface definition ID1 that is sent from the network management system NMS to the network element NE (step 3) shows the byte values as hexadecimal numbers. The first byte 00 in the configuration message M1 sets a value 0 to the parameter *Circuit.* The second byte 05 sets a value 5 to the field *Length* of the parameter *PhoneNumber,* indicating that the next five bytes represent a phone number having five numbers. The bytes 3 to 7 represent ASCII-coded numbers 77900 as corresponding hexadecimal values 37 37 39 30 30. Thus, the bytes 1 to 7 form one data element *CircuitConfiguration,* by which a value 0 is defined to the parameter *Circuit* and a value 77900 to the parameter *PhoneNumber.* Starting from the byte 8 in the configuration message M1, a new *CircuitConfiguration* data element begins, for which the byte 8 (04) defines a value 4 to the parameter *Circuit,* the byte 9 (05) defines a value 5 to the field *Length* and the bytes 10 to 14 (37 37 39 35 38) define a value 77958 to the parameter *PhoneNumber.* Thus, *Configuration* described by the configuration message M1 comprises two *CircuitConfiguration* definitions.

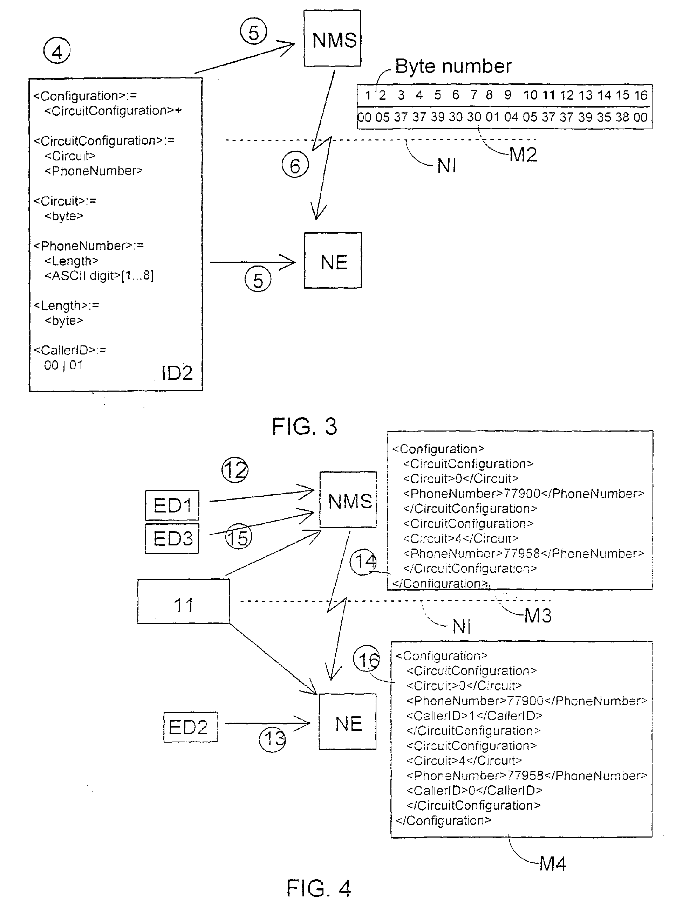

When new functions need to be added to the network element NE, the network interface usually has to be redefined. On the basis of the previous example, Figure 3 describes the change to be made in the interface definition ID1. A parameter *CallerID* that is defined in one byte is added to the data element *CircuitConfiguration* of the interface definition ID1. The parameter *CallerID* can have either a value 0 or 1, while the hexadecimal value of the byte is correspondingly 00 or 01. A new interface definition ID2 is formed this way (step 4). The changed interface definition ID2 is updated both in the network management system NMS and the network element NE (step 5), after which the network management system NMS can transmit configuration information according to the interface definition ID2 to the network element NE (step 6). The bytes 1 to 7 of the configuration message M2 correspond to those of the configuration message M1. However, the eighth byte in the configuration message M2 belongs to the first *CircuitConfiguration* data element in which it defines a value 1 (01) to the *CallerlD* parameter. Starting from the ninth byte, a new *CircuitConfiguration* data element begins, whose bytes 9 to 15 correspond to the bytes 8 to 14 of the previous example. The byte 16, too, belongs to this second *CircuitConfiguration* data element in which it defines a value 0 (00) to the parameter *CallerlD. Configuration* described by the configuration message M2, too, comprises two *CircuitConfiguration* definitions, which have a length of eight bytes, as distinct from the *CircuifConfiguration* definitions of the configuration message M1 that have seven bytes. As the same interface definition ID2 is updated both in the network management system NMS and the network element NE, the received message can be decoded in a right way.

This prior art procedure for defining interfaces does not, however, allow that network elements and a network management system are updated at different times, but the definitions of both of them must be updated before messages can be transferred between them. If the interface definition ID2 in the previous example were updated only in the network management system and the network element still used the message interpretation according to the interface definition ID1, the eighth byte of the configuration message M2 would be interpreted to start the second *CircuitConfiguration* definition, and the message is thus decoded in the wrong way. The demand for updating the network management system and network elements simultaneously makes it more difficult to add new functions and network elements to the telecommunication network and weakens the subscriber capacity in the network for a long time.

The procedure according to the invention for defining interfaces does not require the same interface definition on both sides of the network interface. According to the invention, the network management system and network element can communicate over the network interface, even though their interface definitions were different from each other. The full functionality of interface definitions is achieved when the interface definitions correspond to each other, but differences in interface definitions do not lead to a wrong interpretation of messages conveyed over the network interface, as in the prior art.

According to a preferred embodiment of the invention, interface definition involves a self-describing interface, for the definition of which a self-describing programming language is used. The term self-describing refers herein to any definition of an entity by means of logical rules in such a manner that the entity can be interpreted on the basis of the definition by means of said logical rules autonomously and unambiguously. A data element that is coded by a self-describing mark-up language, such as the data element *CircuitConfiguration* described above, can be decoded at the receiving end independently and exactly correctly regardless of the type, amount, order or length of the parameters contained in the data element. Further, the type of each parameter defined in a self-describing manner can be interpreted in the right way by decoding the received message. A self-describing mark-up language is not, however, restricted to these two levels, but the data elements to be defined may comprise subelements at several levels. In this connection, the term data element refers to any logically defined information entity. Every data element comprises at least one parameter, which is the smallest defined information unit.

In the following, the implementation of the invention is explained by means of the example of Figure 4. In Figure 4, a network interface NI is based on a self-describing mark-up language 11, which is used both in the network management system NMS and in the network element NE. A self-describing mark-up language allows the coding of all data elements required in interface definition, but a mark-up language as such does not include element definitions (ED). That is why element definitions are made directly to the network management system and network element. As the procedure of the invention does not require the same definitions in the network management system and network element, both parties can have their own element definitions ED1 and ED2 that differ from each other and that are correspondingly updated to the network management system (step 12) and network element (step 13).

A configuration message M3 that is formed in a self-describing mark-up language can be transmitted from the network management system, for example, to the network element over the network interface (step 14). By way of example, the content of the message is the same as in the example of Figure 2. Data elements and parameters of the message formed in a self-describing mark-up language may preferably comprise a start field typically describing the name of the data element or parameter, an information field and preferably an end field. The end field typically comprises the name of the data element or parameter and a character, e.g. "/", indicating the end field. Both the start field and the end field are separated from the information field by specific characters, such as "<" and ">". To avoid misunderstandings, fields cannot naturally contain said separation marks. The configuration message M3 starts with a start field *Configuration (<Configuration>)* of the data element. The information field of the data element *Configuration* further comprises two *CircuitConfiguration* data elements with their own definitions. The configuration message M3 ends with the end field (*<*/*Configuration>*) of the data element *Configuration.* Correspondingly, both *CircuitConfiguration* data elements comprise a start field and an end field and an information field between them, which further comprises definitions to two parameters *Circuit* and *PhoneNumber.* These parameter definitions further comprise a start field and an end field and a value for said parameter in an information field between them. The network management system comprises preferably coding and decoding means for forming and interpreting messages according to a self-describing mark-up language. The definitions of data elements and parameters described herein are not necessarily in accordance with any known mark-up language, but they are merely shown by way of example. The self-describing definition according to the invention can be carried out in an unlimited amount of self-describing mark-up languages, which may be in accordance with a standard or de facto standard, or which may be mark-up languages that are clearly planned for a specific purpose. One self-describing mark-up language, for which a standard specification has been published, is known by the name XML (Extensible Mark-up Language), which can also be applied to the method of the invention.

The structure of the self-describing mark-up language described above is only one example of how to form a self-describing mark-up language. A language structure may also differ quite much from what is described above. For example, it is not necessary to use an end field, if the beginning of the next data element or parameter can be indicated otherwise, for example by giving the length of the information field in the start field. Thus, the implementation of the invention is not dependent on the used mark-up language nor on its structure, but the invention can be implemented using any self-describing mark-up language by which coded messages can be decoded independently and unambiguously at the reception process, regardless of the type, amount, order or length of data elements and parameters of messages.

Also the network element comprises coding and decoding means for forming and interpreting messages according to a self-describing mark-up language, so the network element can decode the definitions of the configuration message M3. This does not require that element definitions stored in the network element would correspond to those in the network management system. The receiving network element decodes two *CircuitConfiguration* data elements of the data element *Configuration* contained in the configuration message M3 and defines values 0 and 77900 and 4 and 77958 correspondingly to the parameters *Circuit* and *PhoneNumber.* In order for the network element to be able to interpret the decoded parameters and their values in the manner required by the network management system, element definitions, i.e. definitions for control information given by each parameter, that correspond to those of the network management system have to be stored in the network element.

According to a preferred embodiment of the invention, telecommunication network parts on different sides of the network interface NI can be updated at different times without having to interrupt the communication over the network interface during the time the updating is carried out on both sides of the network interface. Network elements need not be disconnected from the telecommunication network during updating either. This is possible, as the receiving network element can decode e.g. the following message, which is defined according to the invention, independently and unambiguously:
*<Circuit>5<*/*Circuit><NewElement>12345<*/*NewElement><PhoneN umber>77358<*/*PhoneNumber>,*

in which the network element does not know the parameter *NewElement* in advance, i.e. no element definition for the data element or parameter *NewElement* has been made to the network element. However, this is coded in accordance with the mark-up language, so the receiving network element can decode it right, giving the parameter a name *NewElement* and a value 12345.

Figure 4 further illustrates how a new data element or parameter is added to interface definition. A new element definition ED3 is added to the network management system NMS (step 15). A configuration message M4, which also comprises a parameter *CallerlD* according to the element definition ED3, is sent to the network element NE (step 16). The receiving network element decodes two *CircuitConfiguration* data elements of the data element *Configuration* contained in the configuration message M4, like in the decoding of the configuration message M3 described above, adding the parameter *CallerID* to both *CircuitConfiguration* data elements and giving the corresponding values 1 and 0 to them. If a definition for control information that is given by the parameter *CallerID* and its value is stored in the network element, the configuration measure relating to the parameter can be taken. If said element definition has not been made, the decoded parameter *CallerlD* and its value can for example be left unnoticed or they can be reported back to the network management system and an announcement of an unknown parameter can be made. The existence of a new data element or parameter does not, however, hinder the communication over the network interface nor does it require the simultaneous updating of the network management system and network element. Further, all the data elements and parameters received in the message can be decoded right and also interpreted right, if control information, i.e. element definitions, are defined to data elements and parameters.

To illustrate the invention, messages to be conveyed over the network interface and the definitions included in the messages are shown as ASCII-coded data elements and parameters in the above example. According to a preferred embodiment of the invention, any coding method, e.g. binary coding, can be employed. Thus, the amount of information to be conveyed over the network interface can be decreased.

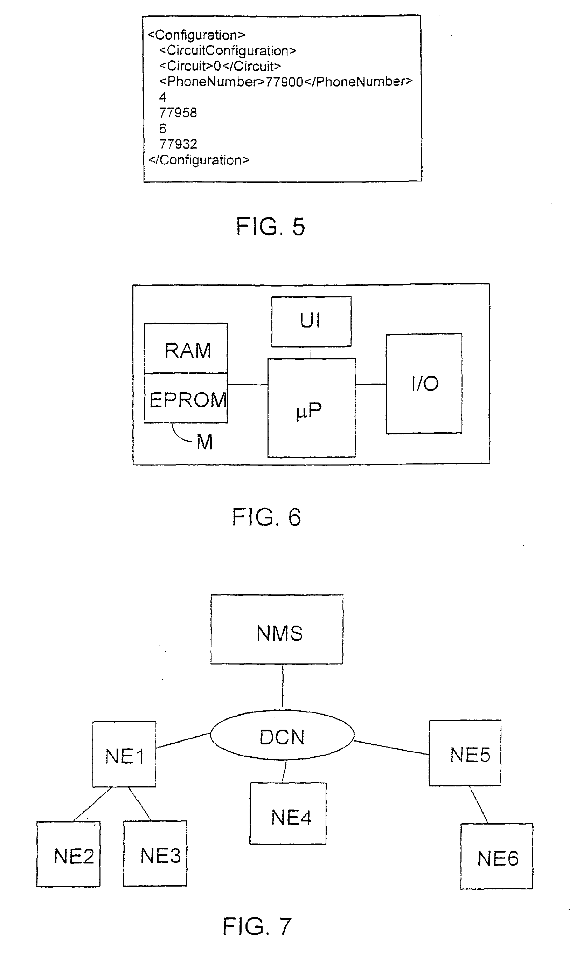

According to a preferred embodiment of the invention, the amount of information can be further decreased in messages, especially when several messages or data elements having a similar structure are transmitted one after the other. This is illustrated in the following by means of Figure 5. A message can preferably be coded such that the definitions of data elements and parameters are coded only to the first message or data element and only the corresponding values are coded in the following messages and data elements. Thus, definitions that are the same as in the first message or data element need not be added to every message and data element. In the exemplary message of Figure 5, the first *CircuitConfiguration* data element of the data element *Configuration* comprises definitions for the parameters *Circuit* and *PhoneNumber* and the corresponding values 0 and 77900. As the following data elements are also *CircuitConfiguration* data elements, their definitions need not be made separately, but the same definitions are used in decodings as in the previous data element. It is then enough that the parameter values (4 and 77958 and 6 and 77932) of these data elements are added to the message to be coded. Only when the definitions of the message or data element to be transmitted change, the message to be transmitted with new definitions is coded completely with self-describing definitions. A change in the definitions can preferably be expressed in the end field of the element definition, as in the end field *<*/*Configuration>* of the example in Figure 5. This procedure reduces the amount of information to be transferred over the network interface considerably. Messages that are coded according to a preferred embodiment of the invention can preferably be compressed in a more compact form with any known compressing method, in principle, which further reduces the amount of information to be transferred.

Figure 6 illustrates next a telecommunication network element used for utilising the invention. As the method of the invention can be employed for defining the interface in both directions over the interface, a telecommunication network element of the invention can be implemented in the network management system or network element. In addition to means typically belonging to each telecommunication network element, the telecommunication network element of the invention preferably comprises means (UI, User Interface) for feeding element definitions to an apparatus, means for storing the element definitions (M, Memory), means for coding the element definitions by means of a self-describing mark-up language (µP, Micro Processor) and communication means (I/O, Input/Output) for receiving the coded element definitions and/or conveying them over the interface. Said means for feeding element definitions (UI) to an apparatus may preferably comprise a display and a keyboard. Further, means for storing element definitions (M) may preferably comprise random access memory (RAM) for storing element definitions and preferably erasible programmable read-only memory (EPROM) for storing coding instructions that are in accordance with a self-describing mark-up language. Means for coding element definitions (µP) may preferably be used also in the decoding of received coded data elements.

Figure 7 shows a telecommunication system according to a preferred embodiment of the invention in a simplified way, in which system a network management system NMS is in connection with several network elements NE1 to NE6 via a data communication network DCN. The data communication network DCN forms a network interface NI between the network management system and the network elements NE1 to NE6. Interface definitions that are made according to the invention are not dependent on the data transmission protocol used in the data communication network DCN, but the information on the definitions can be transferred by means of any data transmission protocol. The telecommunication system of the invention can be implemented in any telecommunication network.

In the foregoing description and drawings the invention has been described only by way of example, and it is by no means to be so restricted. It will be apparent for those skilled in the art that the invention can be applied to any other telecommunication network, in which a network management system and network elements convey control information via a network interface. Therefore, different embodiments of the invention may vary within the scope of the appended claims.

## Claims

1. A method for defining an interface between a network management system and a network element in a telecommunication network, in which method data elements that can be transferred over an interface are defined,
**characterized by**
coding said data elements that can be transferred over the interface and their values by means of a self-describing mark-up language,
conveying the data elements and their values coded by means of said self-describing mark-up language over said interface and
decoding the received data elements and their values.

2. A method as claimed in claim 1, **characterized by** storing said element definitions in the network management system and network element.

3. A method as claimed in claim 2, **characterized by** storing different element definitions in the network management system and network element.

4. A method as claimed in claim 2 or 3, **characterized by**
defining an element definition that differs from said stored element definitions and
storing said differing element definition in the network management system and/or network element.

5. A method as claimed in any one of the preceding claims,
**characterized by** taking control measures according to the received decoded data elements and their values in response to said data elements being defined in the receiving network management system or network element.

6. A method as claimed in any one of the preceding claims,
**characterized by** coding the data elements and their values by means of said self-describing mark-up language into a message such that the coded message comprises a start field, an information field and an end field.

7. A method as claimed in any one of claims 1 to 5, **characterized by** coding the data elements and their values by means of said self-describing mark-up language into a message such that the coded message comprises an information field and a start field indicating the length of the information field.

8. A method as claimed in claim 6 or 7, **characterized by**
coding the first message such that it comprises at least a start field and an information field and
coding the following messages such that they comprise an information field, in response to the structure of said following messages being defined to correspond to that of the first message.

9. A method as claimed in any one of claims 6 to 8, **characterized by** coding the messages as binary coding.

10. A method as claimed in any one of claims 6 to 9, **characterized by** compressing the coded messages such that the amount of information in the messages decreases.

11. A telecommunication system comprising a network management system and at least one network element, and an interface between them, the interface being arranged to be defined by means of data elements,
**characterized in that**
said data elements and their values are arranged to be coded by means of a self-describing mark-up language,
the data elements and their values coded by means of said self-describing mark-up language are arranged to be conveyed over said interface and
the received data elements and their values coded by means of said self-describing mark-up language are arranged to be decoded.

12. A telecommunication system as claimed in claim 11, **characterized in that**
element definitions are stored in the network management system and/or network element.

13. A telecommunication system as claimed in claim 12,
**characterized in that** different element definitions are stored in the network management system and network element.

14. A telecommunication system as claimed in any one of claims 11 to 13, **characterized in that** control measures that are in accordance with the received decoded data elements and their values are arranged to be taken in response to said data elements being defined in the receiving network management system or network element.

15. A telecommunication system as claimed in any one of claims 11 to 14, **characterized in that** the data elements and their values are coded by means of said self-describing mark-up language into a message such that the coded message comprises a start field, an information field and an end field.

16. A telecommunication system as claimed in any one of claims 11 to 14, **characterized in that** the data elements and their values are coded by means of said self-describing mark-up language into a message such that the coded message comprises an information field and a start field indicating the length of the information field.

17. A telecommunication system as claimed in claim 15 or 16,
**characterized in that**
the first message is coded such that it comprises at least a start field and an information field and
the following messages are coded such that they comprise an information field, in response to the structure of said following messages being defined to correspond to that of the first message.

18. A telecommunication system as claimed in any one of claims 15 to 17, **characterized in that** the messages are coded as binary coding.

19. A telecommunication system as claimed in any one of claims 15 to 18, **characterized in that** the coded messages are compressed in such a manner that the amount of information has been decreased in the messages.

20. A telecommunication network element arranged to define an interface between a network management system and a network element in the telecommunication network, **characterized in that**
the apparatus comprises means for coding data elements and their values by means of a self-describing mark-up language and/or
means for decoding the data elements and their values coded by means of the self-describing mark-up language and
communication means for receiving the coded data elements and their values and/or conveying them over the interface.

21. A telecommunication network element as claimed in claim 20,
**characterized in that** the apparatus further comprises means for feeding and storing element definitions in a network management system or network element.

22. A telecommunication network element as claimed in claim 20 or 21, **characterized in that** said means for coding the data elements and their values by means of the self-describing mark-up language are arranged to code the data elements and their values into a message such that the coded message comprises a start field, an information field and an end field.

23. A telecommunication network element as claimed in claim 20 or 21, **characterized in that** said means for coding the data elements and their values by means of the self-describing mark-up language are arranged to code the data elements and their values into a message such that the coded message comprises an information field and a start field indicating the length of the information field.

24. An apparatus as claimed in claim 22 or 23, **characterized in that**
said means for coding the data elements and their values by means of the self-describing mark-up language are arranged to code the first message such that it comprises at least a start field and an information field and
the following messages such that they comprise an information field, in response to the structure of said following messages being defined to correspond to that of the first message.

## Patentansprüche

1. Verfahren zum Definieren einer Schnittstelle zwischen einem Netzwerkmanagementsystem und einem Netzwerkelement in einem Telekommunikationsnetzwerk, in welchem Verfahrensdatenelemente, die über eine Schnittstelle übertragen werden können, definiert sind,
**gekennzeichnet durch**
Codieren der über die Schnittstelle übertragbaren Datenelemente und ihrer Werte mittels einer selbstbeschreibenden Auszeichnungssprache,
Befördern der Datenelemente und ihrer mittels der selbstbeschreibenden Auszeichnungssprache codierten Werte über die Schnittstelle und
Decodieren der empfangenen Datenelemente und ihrer Werte.

2. Verfahren nach Anspruch 1, **gekennzeichnet durch** Speichern der Elementdefinitionen im Netzwerkmanagementsystem und Netzwerkelement.

3. Verfahren nach Anspruch 2, **gekennzeichnet durch** Speichern verschiedener Elementdefinitionen im Netzwerkmanagementsystem und Netzwerkelement.

4. Verfahren nach Anspruch 2 oder 3, **gekennzeichnet durch** Definieren einer Elementdefinition, die sich von den gespeicherten Elementdefinitionen unterscheidet und Speichern der abweichenden Elementdefinition im Netzwerkmanagementsystem und/oder Netzwerkelement.

5. Verfahren nach einem der vorhergehenden Ansprüche, **gekennzeichnet durch** Ergreifen von Steuermaßnahmen entsprechend der empfangenen decodierten Datenelemente und ihrer Werte in Reaktion auf das Definieren der Datenelemente im empfangenden Netzwerkmanagementsystem oder Netzwerkelement.

6. Verfahren nach einem der vorhergehenden Ansprüche, **gekennzeichnet durch** Eincodieren der Datenelemente und ihrer Werte mittels der selbstbeschreibenden Auszeichnungssprache in eine Nachricht derart, dass die codierte Nachricht ein Startfeld, ein Informationsfeld und ein Endfeld aufweist.

7. Verfahren nach einem der Ansprüche 1 bis 5, **gekennzeichnet durch** Eincodieren der Datenelemente und ihrer Werte mittels der selbstbeschreibenden Auszeichnungssprache in eine Nachricht derart, dass die codierte Nachricht ein Informationsfeld und ein die Länge des Informationsfeldes angebendes Startfeld aufweist.

8. Verfahren nach Anspruch 6 oder 7, **gekennzeichnet durch** Codieren der ersten Nachricht derart, dass sie mindestens ein Startfeld und ein Informationsfeld aufweist, und
Codieren der nachfolgenden Nachrichten derart, dass sie in Reaktion darauf, dass die Struktur der nachfolgenden Nachrichten in Übereinstimmung mit der Struktur der ersten Nachricht definiert wird, ein Informationsfeld aufweisen.

9. Verfahren nach einem der Ansprüche 6 bis 8, **gekennzeichnet durch** Codieren der Nachrichten als Binärcodierung.

10. Verfahren nach einem der Ansprüche 6 bis 9, **gekennzeichnet durch** Komprimieren der codierten Nachrichten derart, dass sich die Menge der Information in den Nachrichten verringert.

11. Telekommunikationssystem, umfassend ein Netzwerkmanagementsystem und mindestens ein Netzwerkelement sowie eine dazwischen liegende Schnittstelle, wobei die Schnittstelle darauf eingerichtet ist, mittels Datenelementen definiert zu werden,
**dadurch gekennzeichnet, dass**
die Datenelemente und ihre Werte darauf eingerichtet sind, mittels einer selbstbeschreibenden Auszeichnungssprache codiert zu werden,
die mittels der selbstbeschreibenden Auszeichnungssprache codierten Datenelemente und ihre Werte darauf eingerichtet sind, über die Schnittstelle befördert zu werden, und
die mittels der selbstbeschreibenden Auszeichnungssprache codierten empfangenen Datenelemente und ihre Werte darauf eingerichtet sind decodiert zu werden.

12. Telekommunikationssystem nach Anspruch 11, **dadurch gekennzeichnet, dass** Elementdefinitionen im Netzwerkmanagementsystem und Netzwerkelement gespeichert werden.

13. Telekommunikationssystem nach Anspruch 12, **dadurch gekennzeichnet, dass** verschiedene Elementdefinitionen im Netzwerkmanagementsystem und Netzwerkelement gespeichert werden.

14. Telekommunikationssystem nach einem der Ansprüche 11 bis 13, **dadurch gekennzeichnet, dass** Steuermaßnahmen, die mit den empfangenen decodierten Datenelementen und ihren Werten im Einklang stehen, in Reaktion auf das Definieren der Datenelemente im empfangenden Netzwerkmanagementsystem oder Netzwerkelement zu ergreifen sind.

15. Telekommunikationssystem nach einem der Ansprüche 11 bis 14, **dadurch gekennzeichnet, dass** die Datenelemente und ihre Werte mittels der selbstbeschreibenden Auszeichnungssprache in eine Nachricht eincodiert werden derart, dass die codierte Nachricht ein Startfeld, ein Informationsfeld und ein Endfeld aufweist.

16. Telekommunikationssystem nach einem der Ansprüche 11 bis 14, **dadurch gekennzeichnet, dass** die Datenelemente und ihre Werte mittels der selbstbeschreibenden Auszeichnungssprache in eine Nachricht eincodiert werden derart, dass die codierte Nachricht ein Informationsfeld und ein die Länge des Informationsfeldes angebendes Startfeld aufweist.

17. Telekommunikationssystem nach Anspruch 15 oder 16,
**dadurch gekennzeichnet, dass**
die erste Nachricht derart codiert wird, dass sie mindestens ein Startfeld und ein Informationsfeld aufweist, und
die nachfolgenden Nachrichten derart codiert sind, dass sie ein Informationsfeld aufweisen, das in Reaktion auf das Definieren der Struktur der nachfolgenden Nachrichten in Übereinstimmung mit der Struktur der ersten Nachricht definiert wird.

18. Telekommunikationssystem nach einem der Ansprüche 15 bis 17, **dadurch gekennzeichnet, dass** die Nachrichten als Binärcodierung codiert sind.

19. Telekommunikationssystem nach einem der Ansprüche 15 bis 18, **dadurch gekennzeichnet, dass** die Nachrichten derart komprimiert werden, dass die Menge der Information in den Nachrichten verringert ist.

20. Telekommunikationsnetzwerkelement, welches darauf eingerichtet ist, eine Schnittstelle zwischen einem Netzwerkmanagementsystem und einem Netzwerkelement im Telekommunikationsnetzwerk zu definieren,
**dadurch gekennzeichnet, dass**
die Vorrichtung Mittel zum Codieren von Datenelementen und ihren Werten mittels einer selbstbeschreibenden Auszeichnungssprache und/oder
Mittel zum Decodieren der mittels der selbstbeschreibenden Auszeichnungssprache codierten Datenelemente oder Werte und
Kommunikationsmittel zum Empfang der codierten Datenelemente und ihrer Werte und/oder zur Beförderung derselben über die Schnittstelle aufweist.

21. Telekommunikationsnetzwerkelement nach Anspruch 20, **dadurch gekennzeichnet, dass** die Vorrichtung ferner Mittel zum Zuführen und Speichern von Elementdefinitionen in einem Netzwerkmanagementsystem oder Netzwerkelement aufweist.

22. Telekommunikationsnetzwerkelement nach Anspruch 20 oder 21, **dadurch gekennzeichnet, dass** die Mittel zum Codieren der Datenelemente und ihrer Werte mittels der selbstbeschreibenden Auszeichnungssprache darauf eingerichtet sind, die Datenelemente und ihre Werte derart in eine Nachricht einzucodieren, dass die codierte Nachricht ein Startfeld, ein Informationsfeld und ein Endfeld aufweist.

23. Telekommunikationsnetzwerkelement nach Anspruch 20 oder 21, **dadurch gekennzeichnet, dass** die Mittel zum Codieren der Datenelemente und ihrer Werte mittels der selbstbeschreibenden Auszeichnungssprache darauf eingerichtet sind, die Datenelemente und ihre Werte derart in eine Nachricht einzucodieren, dass die codierte Nachricht ein Informationsfeld und ein die Länge des Informationsfeldes angebendes Startfeld aufweist.

24. Vorrichtung nach Anspruch 22 oder 23,
**dadurch gekennzeichnet, dass**
die Mittel zum Codieren der Datenelemente und ihrer Werte mittels der selbstbeschreibenden Auszeichnungssprache darauf eingerichtet sind, die erste Nachrichten derart zu codieren, dass sie mindestens ein Startfeld und ein Informationsfeld aufweist, und
die nachfolgenden Nachrichten derart, dass sie in Reaktion auf das Definieren der Struktur der nachfolgenden Nachrichten in Überstimmung mit der Struktur der ersten Nachricht ein Informationsfeld aufweist.

## Revendications

1. Procédé de définition d'une interface entre un système de gestion de réseau et un élément de réseau dans un réseau de télécommunication, dans lequel des éléments de données de procédé qui peuvent être transférés à travers une interface sont définis, **caractérisé par** les étapes consistant à :
coder lesdits éléments de données qui peuvent être transférés à travers l'interface et leurs valeurs au moyen d'un langage de balisage autodescriptif ;
transporter les éléments de données et leurs valeurs, codés au moyen dudit langage de balisage autodescriptif, à travers ladite interface ; et
décoder les éléments de données reçus et leurs valeurs.

2. Procédé selon la revendication 1, **caractérisé par** le stockage desdites définitions d'élément dans le système de gestion de réseau et l'élément de réseau.

3. Procédé selon la revendication 2, **caractérisé par** le stockage de différentes définitions d'élément dans le système de gestion de réseau et l'élément de réseau.

4. Procédé selon la revendication 2 ou 3, **caractérisé par** les étapes consistant à :
définir une définition d'élément qui diffère desdites définitions d'éléments stockées ; et
stocker ladite définition d'élément différente dans le système de gestion de réseau et/ou l'élément de réseau.

5. Procédé selon l'une quelconque des revendications précédentes, **caractérisé par** la prise de mesures de commande selon les éléments de données et leurs valeurs décodés reçus en réponse au fait que lesdits éléments de données sont définis dans le système de gestion de réseau ou l'élément de réseau de réception.

6. Procédé selon l'une quelconque des revendications précédentes, **caractérisé par** le codage des éléments de données et de leurs valeurs au moyen dudit langage de balisage autodescriptif en un message de sorte que le message codé comprend un champ de début, un champ d'informations et un champ de fin.

7. Procédé selon l'une quelconque des revendications 1 à 5, **caractérisé par** le codage des éléments de données et de leurs valeurs au moyen dudit langage de balisage autodescriptif en un message de sorte que le message codé comprend un champ d'informations et un champ de début indiquant la longueur du champ d'informations.

8. Procédé selon la revendication 6 ou 7, **caractérisé par** les étapes consistant à :
coder le premier message de sorte qu'il comprend au moins un champ de début et un champ d'informations ; et
coder les messages suivants de sorte qu'ils comprennent un champ d'informations, en réponse au fait que la structure desdits messages suivants est définie pour correspondre à celle du premier message.

9. Procédé selon l'une quelconque des revendications 6 à 8, **caractérisé par** le codage des messages en tant que codage binaire.

10. Procédé selon l'une quelconque des revendications 6 à 9, **caractérisé par** la compression des messages codés de sorte que la quantité d'informations dans les messages diminue.

11. Système de télécommunication comprenant un système de gestion de réseau et au moins un élément de réseau, et une interface entre ceux-ci, l'interface étant agencée pour être définie au moyen d'éléments de données, **caractérisé en ce que**
lesdits éléments de données et leurs valeurs sont agencés pour être codés au moyen d'un langage de balisage autodescriptif ;
les éléments de données et leurs valeurs, codés au moyen dudit langage de balisage autodescriptif, sont agencés pour être transportés à travers ladite interface ; et
les éléments de données reçus et leurs valeurs, codés au moyen dudit langage de balisage autodescriptif, sont agencés pour être décodés.

12. Système de télécommunication selon la revendication 11, **caractérisé en ce que** des définitions d'élément sont stockées dans le système de gestion de réseau et/ou l'élément de réseau.

13. Système de télécommunication selon la revendication 12, **caractérisé en ce que** différentes définitions d'élément sont stockées dans le système de gestion de réseau et l'élément de réseau.

14. Système de télécommunication selon l'une quelconque des revendications 11 à 13, **caractérisé en ce que** des mesures de commande qui sont conformes aux éléments de données décodés reçus et à leurs valeurs sont agencées pour être prises en réponse au fait que lesdits éléments de données sont définis dans le système de gestion de réseau ou l'élément de réseau de réception.

15. Système de télécommunication selon l'une quelconque des revendications 11 à 14, **caractérisé en ce que** les éléments de données et leurs valeurs sont codés au moyen dudit langage de balisage autodescriptif en un message de sorte que le message codé comprend un champ de début, un champ d'informations et un champ de fin.

16. Système de télécommunication selon l'une quelconque des revendications 11 à 14, **caractérisé en ce que** les éléments de données et leurs valeurs sont codés au moyen dudit langage de balisage autodescriptif en un message de sorte que le message codé comprend un champ d'informations et un champ de début indiquant la longueur du champ d'informations.

17. Système de télécommunication selon la revendication 15 ou 16,
**caractérisé en ce que**
le premier message est codé de sorte qu'il comprend au moyen un champ de début et un champ d'informations ; et
les messages suivants sont codés de sorte qu'ils comprennent un champ d'informations, en réponse au fait que la structure desdits messages suivants est définie pour correspondre à celle du premier message.

18. Système de télécommunication selon l'une quelconque des revendications 15 à 17, **caractérisé en ce que** les messages sont codés en tant que codage binaire.

19. Système de télécommunication selon l'une quelconque des revendications 15 à 18, **caractérisé en ce que** les messages codés sont comprimés d'une manière telle que la quantité d'informations a été diminuée dans les messages.

20. Elément de réseau de télécommunication agencé pour définir une interface entre un système de gestion de réseau et un élément de réseau dans le réseau de télécommunication, **caractérisé en ce que**
le dispositif comprend des moyens pour coder des éléments de données et leurs valeurs au moyen d'un langage de balisage autodescriptif ; et/ou
des moyens pour décoder les éléments de données et leurs valeurs, codés au moyen du langage de balisage autodescriptif ; et
des moyens de communication pour recevoir les éléments de données codés et leurs valeurs et/ou pour les transporter à travers l'interface.

21. Elément de réseau de télécommunication selon la revendication 20, **caractérisé en ce que** le dispositif comprend en outre des moyens pour amener et stocker des définitions d'élément dans un système de gestion de réseau ou un élément de réseau.

22. Elément de réseau de télécommunication selon la revendication 20 ou 21, **caractérisé en ce que** lesdits moyens pour coder les éléments de données et leurs valeurs au moyen du langage de balisage autodescriptif sont agencés pour coder les éléments de données et leurs valeurs en un message de sorte que le message codé comprend un champ de début, un champ d'informations et un champ de fin.

23. Elément de réseau de télécommunication selon la revendication 20 ou 21, **caractérisé en ce que** lesdits moyens pour le codage des éléments de données et leurs valeurs au moyen du langage de balisage autodescriptif sont agencés pour coder les éléments de données et leurs valeurs en un message de sorte que le message codé comprend un champ d'informations et un champ de début indiquant la longueur du champ d'informations.

24. Dispositif selon la revendication 22 ou 23, **caractérisé en ce que**
lesdits moyens pour le codage des éléments de données et de leurs valeurs au moyen du langage de balisage autodescriptif sont agencés pour coder le premier message de sorte qu'il comprend au moins un champ de début et un champ d'informations ; et
les messages suivants de sorte qu'ils comprennent un champ d'informations en réponse au fait que la structure desdits messages suivants est définie pour correspondre à celle du premier message.
